# EUROPEAN PATENT SPECIFICATION

(11) **EP 3 316 392 B1**
(45) Date of publication and mention of the grant of the patent: **22.04.2020**
(21) Application number: 16814685.0
(22) Date of filing: 23.06.2016
(51) Int. Cl.: H01M 10/6563, H01M 10/63, H01M 10/613, H01M 10/6556

(54) **BATTERY COOLING APPARATUS**
BATTERIEKÜHLVORRICHTUNG
APPAREIL DE REFROIDISSEMENT DE BATTERIE

(30) Priority: 24.06.2015 KR 20150089940; 21.07.2015 KR 20150103099; 21.07.2015 KR 20150103100; 21.07.2015 KR 20150103101; 21.07.2015 KR 20150103102; 28.07.2015 KR 20150106668
(43) Date of publication of application: 02.05.2018
(73) Proprietor: Amotech Co. Ltd., Incheon 405-846 (KR)
(72) Inventor: KIM, Byung Soo, Anyang-si Gyeonggi-do 431-846 (KR); LEE, Dong Hoon, Yongin-si Gyeonggi-do 449-804 (KR); UHM, Hee Chul, Gwangju-si, Gyeonggi-do (KR); LEE, Jong Hun, Incheon 21324 (KR)
(74) Representative: Lambacher, Michael
(86) International application number: PCT/KR2016/006653
(87) International publication number: WO 2016/208972

(56) References cited:
- EP-A1- 2 634 835
- KR-A- 20120 032 299
- KR-A- 20120 032 299
- KR-A- 20130 051 102
- KR-A- 20150 067 842
- KR-B1- 101 408 000
- KR-U- 20000 002 345
- US-A1- 2014 016 269
- US-A1- 2014 356 657

## Description

### TECHNICAL FIELD

The present disclosure relates to a battery cooling apparatus, and more particularly, to a battery cooling apparatus for cooling heat generated during charging and discharging of a battery.

### BACKGROUND ART

Generally, a high-capacity battery is installed in an electric vehicle or a hybrid vehicle to supply electric power to a motor and an electric device of the vehicle, and electric energy produced when the vehicle is driven is charged into the battery.

The battery generates heat during repeated charging and discharging, and requires a battery cooling system because the battery life is shortened if the battery temperature rises sharply.

An example of a conventional vehicular battery cooling apparatus is disclosed in Korean Patent Registration Publication No. 10-1264623.Since the battery cooling apparatus is provided with one blower fan in one battery housing having a plurality of batteries, the battery needs to be cooled through one blower fan. Accordingly, there is a problem that the size of the blower fan is increased, and the space in which the battery cooling apparatus is installed is increased. Further, EP 2 634 835 A1 relates to a battery system that houses a plurality of battery modules in a plurality of tiers. A wiring substrate may be placed behind one of the battery modules to generate a flow of air forcedly on an air passage by a fan provided in the external wiring substrate.

In addition, in conventional battery cooling apparatuses, a connecting duct is connected to one side of the batteries and air passing between the batteries is sucked through the connecting duct. Here, since air is sucked into one suction passage, an air blowing volume varies depending on the position of each of the batteries. Accordingly, there is a problem that the life of each of the batteries is shortened because the battery is not uniformly cooled as a whole.

### DISCLOSURE

### TECHNICAL PROBLEM

It is an object of the present disclosure to provide a battery cooling apparatus capable of uniformly cooling batteries by performing battery cooling by a plurality of cooling fans, and having the plurality of cooling fans installed in a housing to enable downsizing.

It is another object of the present disclosure to provide a battery cooling apparatus capable of simplifying an assembling process by connecting a plurality of cooling fans to one PCB and simplifying wiring by integrating power connection of the plurality of cooling fans into one PCB.

It is still another object of the present disclosure to provide a battery cooling apparatus which includes a plurality of suction ports through which air is sucked so that air can evenly flow through the entire surface of a battery cell to prevent the battery cell from being locally cooled.

It is yet another object of the present disclosure to provide a battery cooling apparatus capable of changing the position and number of an air outlet so that the air outlet can be changed according to the characteristics of the position where the battery is installed, thereby improving the compatibility.

### TECHNICAL SOLUTION

There is provided a battery cooling apparatus according to the present disclosure comprising: a housing installed on a side surface of a battery pack and having a suction unit through which air having passed through the battery pack is sucked and a discharge unit through which air sucked through the suction unit is discharged to the outside; a plurality of cooling fans installed at intervals in the housing to suck air through the suction unit and discharge air through the discharge unit; and a printed circuit board (PCB) installed in an inside of the housing, in which the plurality of cooling fans are fixed and electrically connected to control operations of the cooling fans.

The PCB includes a main PCB and a plurality of sub-PCBs formed integrally with the main PCB and formed in the same number as the number of the cooling fans, in which the plurality of cooling fans are fixed and electrically connected to the plurality of sub-PCBs.

Each of the sub-PCBs includes a central throughhole through which a rotating shaft of one of the cooling fans passes, in which a plurality of terminals electrically connected to the cooling fan are mounted.

At least one of the sub-PCBs may be separated from the main PCB and connected to the main PCB by a terminal.

The housing may have a first hole portion through which the rotation shaft of the cooling fan passes and a second hole portion through which a terminal passes, in which the terminal may be electrically connected to a coil of the stator by performing soldering through the second hole portion.

The housing may include a first housing having the discharge ports formed therein and having the cooling fans and the PCB installed therein, and a second housing coupled to the first housing and having a plurality of the suction ports formed therein.

A guide unit for guiding an air flow to radially discharge air flowing in an axial direction of the cooling fan, and a duct unit formed at an upper side of the guide unit for collecting air blown from the plurality of cooling fans, may be formed in an inside of the housing.

The discharge unit may be formed on a rear surface of the housing to discharge air to a rear side of the housing, or may be formed on an upper surface of the housing to discharge air in an upward direction of the housing.

The suction unit formed on a front surface of the housing may be formed of suction ports in an identical number to that of the cooling fans.

A space portion for securing a distance H between the suction unit and a side surface of the battery pack may be formed on a front surface of the housing where the suction unit is formed.

The space portion may be provided with a partitioning member for partitioning between the plurality of suction ports to prevent occurrence of air blowing passage interference between the cooling fans.

Each of the cooling fans may include a rotating shaft rotatably supported by a support portion formed in the housing, a stator fixed to an outer circumferential surface of the support portion and electrically connected to the PCB, a rotor fixed to the rotating shaft and rotated together with the rotating shaft, and a blade installed in the rotor in which air is sucked in an axial direction of the blade and air is radially discharged.

The PCB may further include a connector connected to the PCB via wires to control the plurality of cooling fans and supply power, in which the wires may include a pair of power connecting wires for supplying power to the plurality of cooling fans, a duty command wire for controlling a motor RPM, a power control wire, and rotational speed applying wires provided in an identical number to that of the cooling fans, for applying a rotational speed signal of each cooling fan.

The battery cooling apparatus may further include a connector connected to the PCB to control the plurality of cooling fans and supply power, in which the connector may include a connector housing formed integrally with the housing, and a plurality of connector pins fixed to an inside of the connector housing and connected to the PCB.

The plurality of connector pins may include a pair of power connection pins for supplying power to the plurality of cooling fans, a duty command pin for controlling the motor RPM, a power control pin, and a rotational speed applying pin for applying a rotational speed signal of each cooling fan.

### ADVANTAGEOUS EFFECTS

As described above, the battery cooling apparatus according to some embodiments of the present disclosure performs battery cooling by a plurality of cooling fans, so that a battery or batteries can be uniformly cooled, and a plurality of cooling fans can be installed in a housing, to enable downsizing.

In addition, according to some embodiments of the present disclosure, there is provided a battery cooling apparatus capable of simplifying an assembling process by connecting a plurality of cooling fans to one PCB and simplifying wiring by integrating power connection of the plurality of cooling fans into one PCB.

In addition, according to some embodiments of the present disclosure, a battery cooling apparatus includes a plurality of suction ports through which air is sucked so that air can evenly flow through the entire surface of a battery cell to prevent the battery cell from being locally cooled.

Further, the position and number of the air discharge ports may be changed, and the air discharge ports may be changed according to the characteristic of the position where the battery or batteries may be installed, so that compatibility can be improved.

### BRIEF DESCRIPTION OF THE DRAWINGS

FIG. 1 is a perspective view of a battery cooling apparatus according to an embodiment of the present disclosure.
FIG. 2 is a cross-sectional view of a battery cooling apparatus according to an embodiment of the present disclosure.
FIG. 3 is an exploded perspective view of a battery cooling apparatus according to an embodiment of the present disclosure.
FIG. 4 is a side view of a battery cooling apparatus according to an embodiment of the present disclosure, in which the battery cooling apparatus is installed in a battery pack.
FIG. 5 is a cross-sectional view illustrating a housing and a cooling fan of a battery cooling apparatus according to an embodiment of the present disclosure.
FIG. 6 is a perspective view of discharge ports of a battery cooling apparatus according to another embodiment of the present disclosure.
FIG. 7 is a perspective view of a duct portion of a battery cooling apparatus according to another embodiment of the present disclosure.
FIG. 8 is a perspective view of a structure of suction ports of a battery cooling apparatus according to another embodiment of the present disclosure.
FIG. 9 is a cross-sectional view of a structure of suction ports according to another embodiment of the present disclosure.
FIG. 10 is a plan view of a PCB according to another embodiment of the present disclosure.
FIG. 11 is a plan view of a PCB according to another embodiment of the present disclosure.
FIG. 12 is a plan view of a connector connecting structure according to an embodiment of the present disclosure.
FIG. 13 is a cross-sectional view of a connector connecting structure according to another embodiment of the present disclosure.
FIG. 14 is a cross-sectional view of a connector according to another embodiment of the present disclosure.

### BEST MODE

Hereinafter, embodiments of the present disclosure will be described in detail with reference to the accompanying drawings.The sizes and shapes of the components shown in the drawings may be exaggerated for clarity and convenience.In addition, terms defined in consideration of the configuration and operation of the present disclosure may vary depending on the intention or custom of the user, the operator, and the like.Definitions of these terms should be based on the content of this specification.

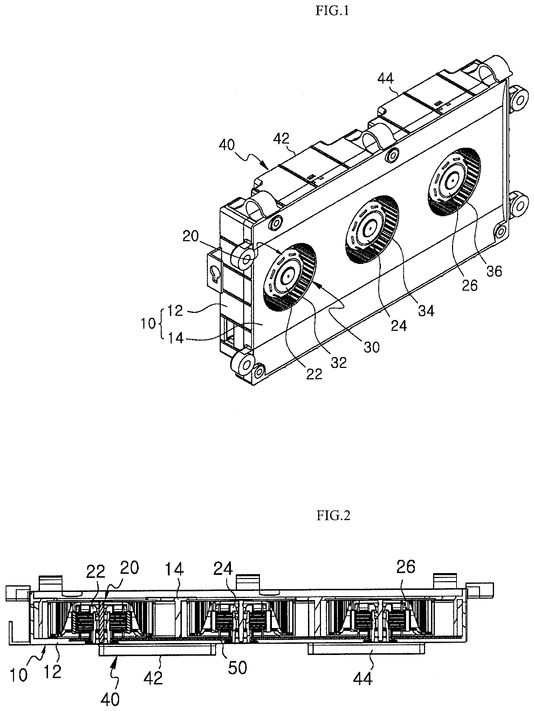

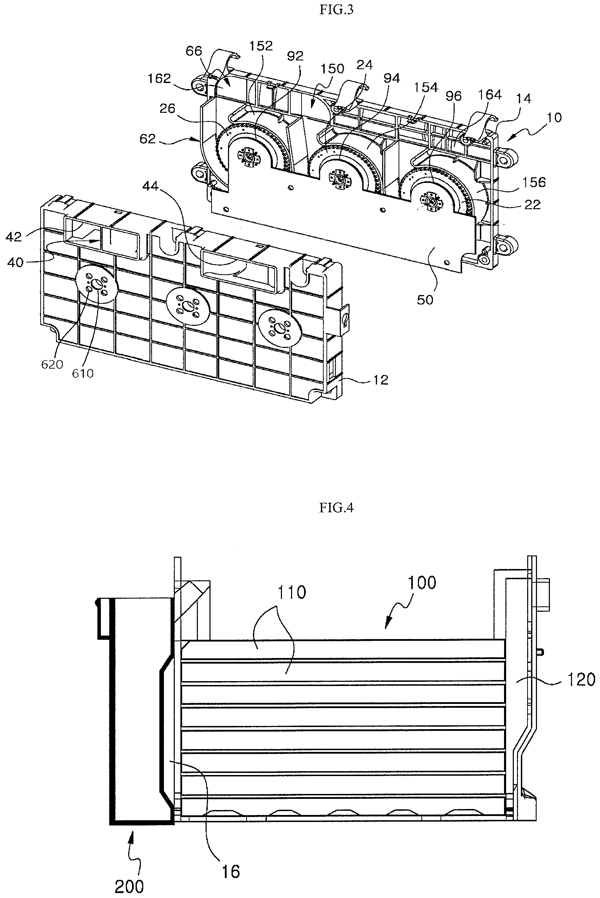

Referring to FIGS. 1 to 4, a battery cooling apparatus according to an embodiment of the present disclosure includes: a housing 10 installed on a side surface of a battery pack 100 and having a suction unit 30 through which air having passed through the battery pack 100 is sucked and discharge ports through which air sucked through the suction unit is discharged to the outside; a plurality of cooling fans 20 installed at intervals in the housing 10 to generate air blowing power; and a printed circuit board (PCB) 50 installed in an inside of the housing 10, in which the PCB 50 is electrically connected to the plurality of cooling fans 20 to perform control operations of the cooling fans 20 and supply power to the cooling fans 20.

The battery pack 100 includes a plurality of battery cells 110 spaced apart to form one battery pack 100 and a cooling apparatus 200 is installed on one side of the battery pack 100.When the cooling apparatus 200 is driven, air is sucked into the spaces between the battery cells 110 to cool the battery cells 110 while passing between the battery cells 110.

A suction duct 120, through which external air is sucked, may be separately installed on the other side of the battery pack 100, that is, the side opposite to the side where the cooling apparatus 200 is installed.

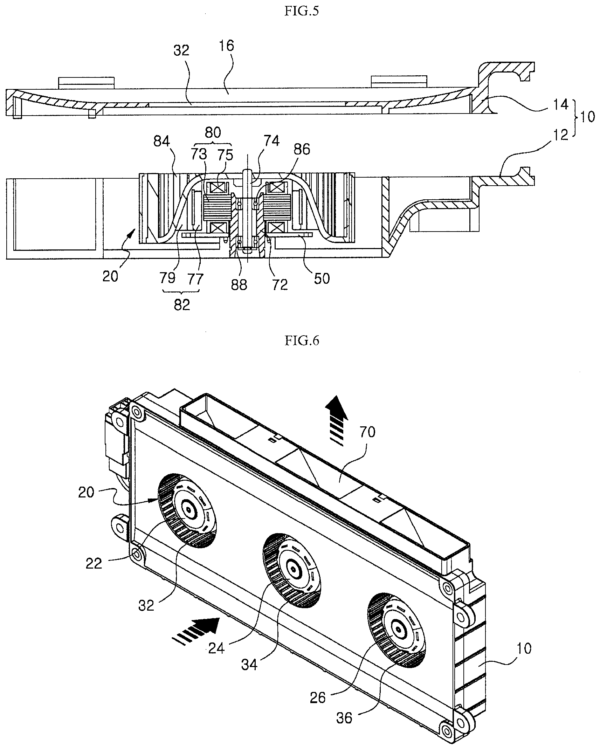

As shown in FIG. 5, the housing 10 includes a first housing 12 having a discharge unit 40 formed therein and provided with a cooling fan unit 20 and a PCB 50, and a second housing 14 coupled to the first housing 12 and suction ports 30 are formed therein.

The cooling fans 20 may include a first cooling fan 22, a second cooling fan 24, and a third cooling fan 26, which are installed at predetermined intervals in the housing 10.The cooling fans 20 may be two or three or more depending on the size of the battery pack 100.

A plurality of cooling fans 20 are disposed inside the housing 10 and a guide unit 62 for guiding the air flow to radially discharge the air flowing in the axial direction of each of the cooling fans 20 is formed inside the housing 10.

A duct unit 66 for collecting air discharged from the plurality of cooling fans 20 is formed on the upper side of each of the guide portions 62. The discharge port 40 through which air collected in the duct unit 66 is discharged to the outside is formed in the rear upper end of the housing 10.

The guide unit 62 includes a first guide portion 152 mounted with a first cooling fan 22 and guiding the air flow by the first cooling fan 22, a second guide portion 154 mounted with a second cooling fan 24 and guiding the air flow by the second cooling fan 24, and a third guide portion 156 mounted with a third cooling fan 26 and guiding the air flow by the third cooling fan 26.

The duct unit 66 includes a first duct portion 162 formed on the upper surfaces of the first guide portion 152 and the second guide portion 154 and into which the air blown by the first cooling fan 22 and the second cooling fan 24 flows, and a second duct portion 164 formed on the upper surface of the third guide portion 156 and into which the air blown by the third cooling fan 26 flows.

The duct unit 66 may be formed as a single duct portion so that the air blown from the plurality of cooling fans 20 can flow into one duct portion, or may be formed into three duct portions formed one by one for each of the cooling fans 20.

The discharge unit 40 includes a first discharge port 42 formed at the rear of the first duct portion 162 and discharging the air introduced into the first duct portion 162 to the outside, and a second discharge port 44 formed in the second duct portion 164 and discharging the air introduced into the second duct portion 164 to the outside.

Similarly, the discharge unit 40 may be formed as one discharge port 40 when the duct unit 66 is formed in a single form, or may be formed as three discharge ports 40 when the duct unit 66 is formed as three duct portions.

As described above, in the battery cooling apparatus according to the embodiment of the present disclosure, the duct unit 66 through which the air is discharged is formed integrally with the housing 10, so that there is no need to provide a separate duct structure for discharging air, to thereby reduce the number of parts and enable miniaturization of the battery cooling apparatus.

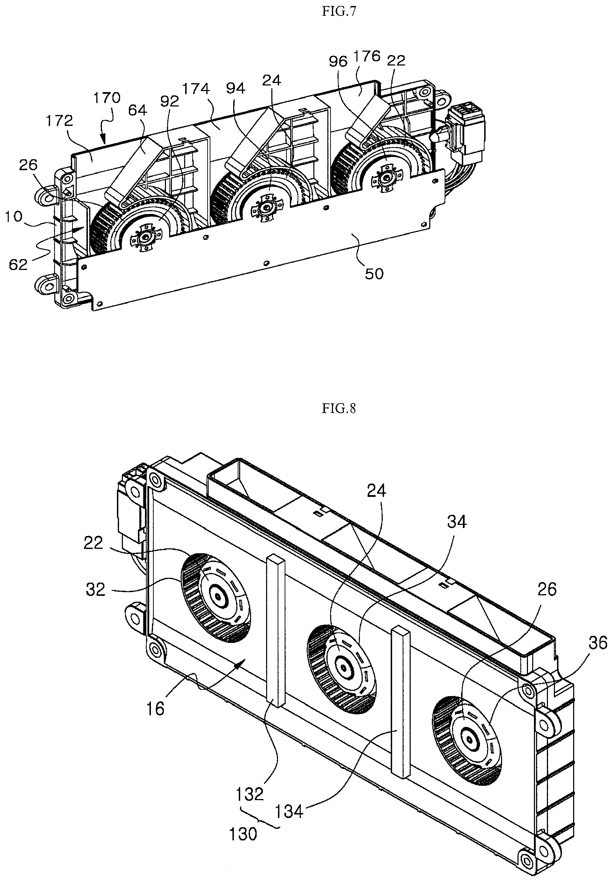

As shown in FIGS. 6 and 7, a duct unit 170 according to another embodiment is formed to have a predetermined space on the upper surface of the guide unit 62 and has an inclined unit 64 which is extended from of the guide unit 62 at one side of the duct unit 170, so that air introduced into the duct unit 170 can be smoothly discharged via the discharge unit 70.

The duct unit 170 includes a first duct portion 172 into which the air blown by the first cooling fan 22 flows, a second duct portion 174 into which the air blown by the second cooling fan 24 flows, and a third duct portion 176 into which the air blown by the third cooling fan 26 flows.

The discharge unit 70 may be formed on an upper surface of the duct unit 170 so that air may be discharged in an upward direction of the housing 10 and the air transferred from the plurality of duct portions 172, 174, and 176 may be discharged via a single discharge port, and the discharge ports in the discharge unit 70 may be formed in the same number as that of the duct portions in the duct unit 170.

The discharge unit 70 according to another embodiment may be formed on an upper surface of the housing 10 so as to discharge air in an upward direction of the housing 10, and may employ a type in which air is discharged to a rear side of the housing 10 and a type in which air is discharged in an upward direction of the housing 10 depending on the nature of the location where the battery cooling apparatus is installed.

Therefore, the battery cooling apparatus according to some embodiments of the present disclosure can also form the position of the discharge unit on the rear side of the housing, the upper side of the housing, and also the front side of the housing, in accordance with the characteristics of a portion where a battery such as an automobile is installed.

The front surface of the housing 10 is in close contact with one surface of the battery pack 100.A space portion 16 recessed inwardly is formed in the front surface of the housing 10 attached to the battery pack 100 so that air passing through the battery cells 110 can be introduced into the space portion 16.

That is, the front edge portion of the housing 10 is in close contact with one surface of the battery pack 100 to prevent air from leaking, and air that has passed through the battery cells 110 flows into the space portion 16, and is sucked through the plurality of suction ports 30 formed in the space portion 16.

In the front surface of the housing 10, the suction ports 30 of the same number as that of the cooling fans 20 are formed. That is, the suction unit 30 includes a first suction port 32 through which air is sucked into the first cooling fan 22, a second suction port 34 through which air is sucked by the second cooling fan 24, and a third suction port 36 through which air is sucked into the third cooling fan 26.

The front surface of the housing 10 in which the suction unit 30 is formed is brought into close contact with the side surface of the battery pack 100 to prevent air from leaking.The space portion 16 for securing a distance H between the suctionunit 30 and the side surface of the battery pack 100 is formed on the front surface of the housing 10 so as to allow air passing between the battery cells 110 to flow in the space portion 16.

The space portion 16 is recessed inwardly of the housing 10 from the front edge of the housing 10 so that the suction unit 30 is not directly connected to the battery pack 100 due to the space portion 16 between the suction unit 30 and the battery pack 100 and the air having passed through the battery cells 110 is introduced into the space portion 16 and sucked into the suction unit 30.

Since the air that has passed through the battery cells 110 flows into the space portion 16 formed in the housing 10 and then is guided to the cooling fans 20 through the suction unit 30, wind pressure can be reduced and wind volume can be increased.

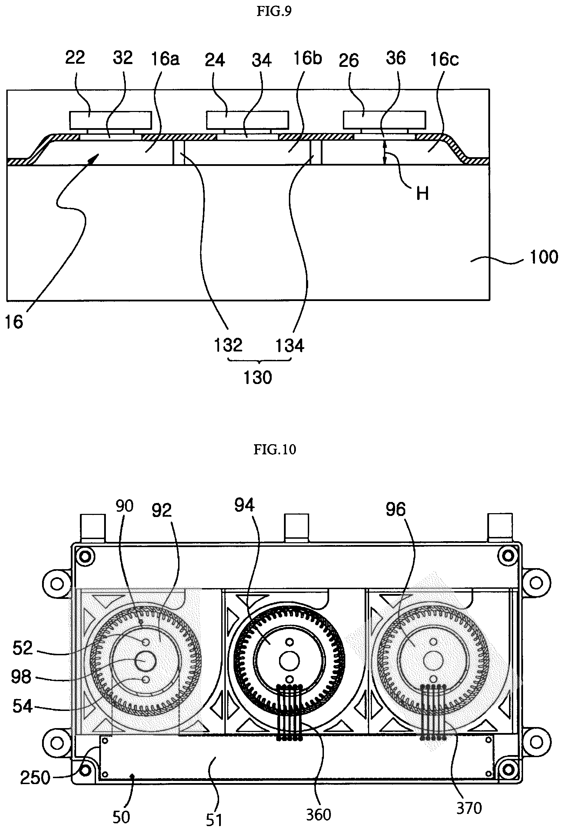

As shown in FIGS. 8 and 9, a partition member 130 for preventing air blowing passage interference between the plurality of cooling fans 20 is formed on the front surface of the housing 10.

The partition member 130 divides the space portion 16 into a plurality of partitions and includes a first partition member 132 formed between the first suction port 32 and the second suction port 34 to prevent air introduced into the first suction port 32 and the second suction port 34 from interfering with each other, and a second partition member 134 formed between the second suction port 34 and the third suction port 36 to prevent air introduced into the second suction port 34 and the third suction port 36 from interfering with each other.

The space portion 16 is formed to be concave so as to have a distance H between the suction unit 30 and the battery pack 100.

The first partition member 132 is protrudingly formed between the first suction port 32 and the second suction port 34 and the second partition member 134 protrudes is protrudingly formed between the second suction port 34 and the third suction port 36.

The space portion 16 includes a first space 16a into which air sucked into the first suction port 32 flows, a second space 16b into which air sucked into the second suction port 34 flows, and a third space 16c into which the air sucked into the third suction port 36 flows.

As described above, when the front surface of the housing 10 is divided into the plurality of spaces 16a and 16b by the partition members 132 and 134, the air introduced into the first space portion 16a is sucked only into the first suction port 32, the air introduced into the second space portion 16b is sucked only into the second suction port 34, and the air introduced into the third space portion 16c is sucked into the third suction port 36. Accordingly, it is possible to prevent occurrence of the air blowing passage interference between the cooling fans 20. When the air blowing passage interference between the cooling fans 20 is reduced, the vortex of the air flowing into the suction unit 30 is reduced and the air volume can be increased.

Each of the cooling fans 20 includes a rotating shaft 74 rotatably supported by a support 72 mounted on the housing 10, a stator 80 fixed to the outer circumferential surface of the support 72 and connected to the PCB 50, a rotor 82 fixed to the rotating shaft 74 and rotated together with the rotating shaft 74, and a blade 84 installed in the rotor 82 and sucking air in an axial direction of the blade 84 and discharging air in a radial direction of the blade 84.

The stator 80 includes a stator core 73 fixed to the outer circumferential surface of the support 72 and a coil 75 wound around the stator core 73.

The rotor 82 includes a magnet 77 that is annularly arranged on the outer circumferential surface of the stator 80 with a predetermined gap therebetween and a rotor support body 79 to which the magnet 77 is fixed and the blade 84 is integrally formed.

A first bearing 86 and a second bearing 88 are mounted in the support 72 to rotatably support the rotating shaft 74.

As shown in FIG. 10, a PCB accommodating portion 250 on which a PCB 50 is mounted is formed in the inside of the housing 10. When the PCB 50 is placed on the PCB accommodating portion 250 and then the first housing 12 and the second housing 14 are assembled, the PCB 50 is fixed to the inside of the housing 10.

The PCB accommodating portion 250 is formed on the inner surface of the housing 10 so as to have a depth equal to the thickness of the PCB 50 so that when the PCB 50 is inserted into the PCB accommodating portion 250, the PCB 50 and the inner surface of the housing 10 are formed in the same plane so as not to interfere with the flow of air flowing into the housing 10.

The PCB accommodating portion 250 may be provided with a release preventing groove or a hook portion to which the PCB 50 is fitted to prevent the PCB 50 from being detached. The PCB 50 may be fixed to the PCB accommodating portion 250 by a method such as adhesion.

Therefore, no separate bolts or fixing parts are required for fixing the PCB 50 to the housing 10, so that an assembling process can be simplified and the number of components can be reduced.

The PCB 50 is integrally formed with a main PCB 51 on which various circuit components are mounted and a plurality of sub-PCBs 90 integrally formed with the main PCB 51 and formed in the same number as the number of the cooling fans 20 so that the cooling fans 20 are fixed and electrically connected to each other.

The sub-PCBs 90 include a first sub-PCB 92 fixed to the first cooling fan 22 to be electrically connected to the first cooling fan 22, a second sub-PCB 92 fixed to the second cooling fan 24 to be electrically connected to the second cooling fan 24, and a third sub-PCB 96 fixed to the third cooling fan 26 to be electrically connected to the third cooling fan 26.

Each of the sub-PCBs 90 is integrally formed on one surface of the main PCB 51 and is formed to have a central throughhole 98 through which the rotating shaft 74 of the cooling fan 20 passes.

At least one of the sub-PCBs 90 may be separated from the main PCB and connected to the main PCB 51 by a terminal.

As shown in FIG. 10, according to an embodiment of the sub-PCBs 90, the first sub-PCB 92 is integrally formed on the main PCB 51, and the second sub-PCB 94 is formed separately from the main PCB 51 and connected to the main PCB 51 via a first terminal 360. The third sub-PCB 96 is formed separately from the main PCB 51 and connected to connected via a second terminal 370.

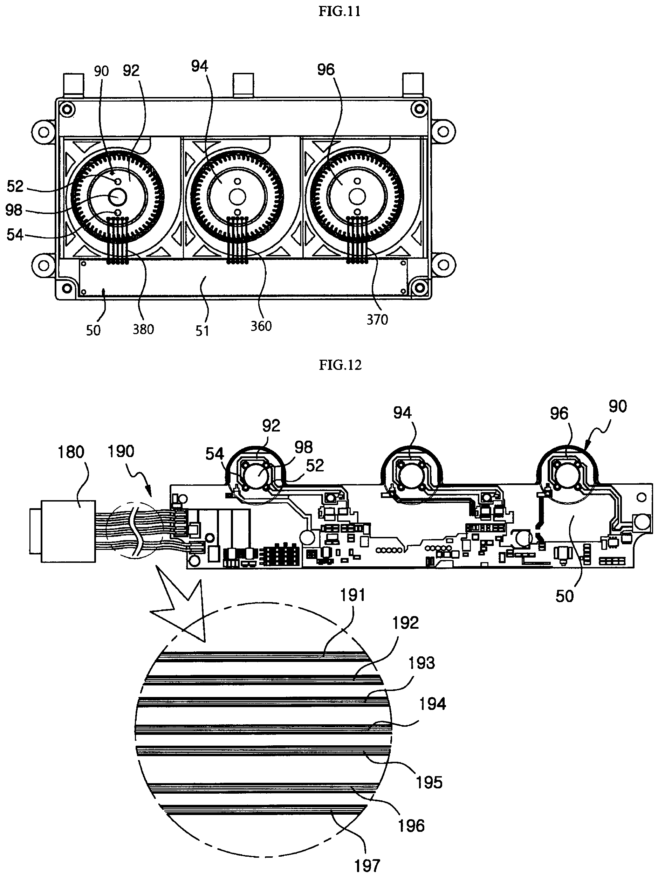

As shown in FIG. 11, according to another embodiment of the sub-PCBs 90, the first sub-PCB 92 is separately formed from the main PCB 51 and electrically connected via a third terminal 380, the second sub-PCB 94 is formed separately from the main PCB 51 and is electrically connected via the first terminal 360, and the third sub-PCB 96 is formed separately from the main PCB 51 and is electrically connected via the second terminal 370.

At least one of the sub-PCBs 92, 94 and 96 is manufactured separately from the main PCB 51 and is connected to the main PCB 51 via the terminals 360 and 370 so that, when the cooling fan 20 is damaged or an error occurs in the sub-PCBs 92, 94, and 96, a replacement operation can be made conveniently.

Terminals 52 and 54 are formed on one side of each sub-PCB 90 that is in contact with the stator 80 of the cooling fan 20 and the terminals 52 and 54 are electrically connected to the coils 75 of the stator 80 electrically.

A first hole 610 through which the rotating shaft 74 passes is formed in the housing 10 and a second hole 620 through which the terminals 52 and 54 pass is formed in the circumferential direction of the first hole 610.

When the PCB 50 is mounted on the PCB accommodating portion 250 of the housing 10, the terminals 52 and 54 protruding from each of the sub-PCBs 90 pass through the second hole 620.Soldering or the like is performed through the first hole 620 to electrically connect each of the terminals 52 and 54 and the coil 75.

The main PCB 51 is connected to a connector 180 through which external power and control signals can be exchanged.

As shown in FIG. 12, a plurality of wires 190 drawn out from one side of the PCB 50 are connected to a connector 180 and fixed to the housing 10 so as to be exposed to the outside. The plurality of wires 190 may be formed of a wire harness in which a plurality of wires are combined, or may be formed in a flexible PCB shape with which the connector 180 may be connected.

The plurality of wires 190 include a pair of power connecting wires 191 and 192 for supplying power to the plurality of cooling fans, a duty command wire 193 for controlling a motor RPM, a power control wire 194, and rotational speed applying wires 195, 196 and 197 provided in an identical number to that of the cooling fans 20, for applying a rotational speed signal of each cooling fan 20.

The connector according to an embodiment of the present disclosure is configured such that one connector 180 is connected to the PCB 50 and a power connection and control signals of the plurality of cooling fans 20 can be exchanged through one connector 180, to thus simplify the structure of the battery cooing apparatus and the assembling process.

In the case of the conventional battery cooling apparatus, if three cooling fans are provided, two power supply connection wires are connected to each of the three cooling fans, to require six wires, three duty command wires are required for each cooling fan, and three rotational speed applying wires are required, and thus a total of 12 wires are connected together. There is a problem in that the structure is complicated and the assemblability is deteriorated.

The connector according to the embodiment of the present disclosure can connect and control the power with three cooling fans 20 by using only seven wires for one connector 180, thereby simplifying the structure.

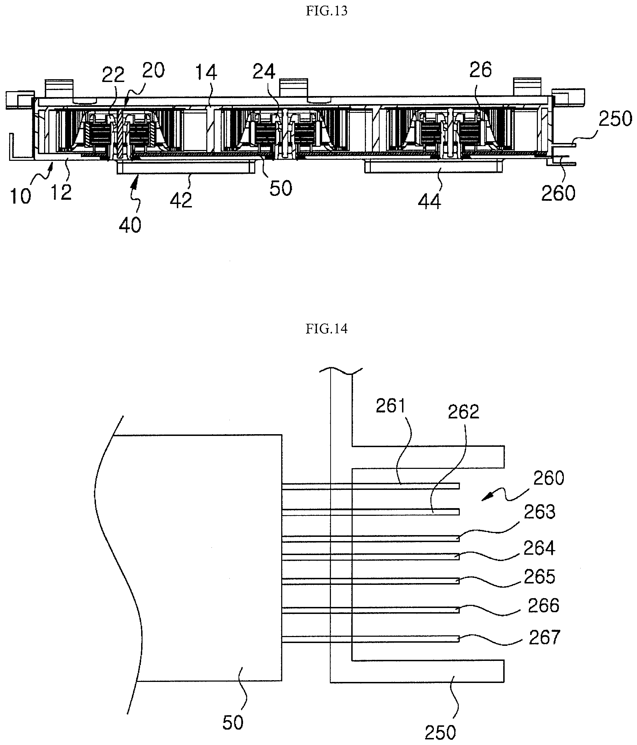

As shown in FIGS. 13 and 14, a connector according to another embodiment includes a connector housing 250 formed integrally with the housing 10 and having an external connector (not shown) to which a power connection wire and a control wire are connected, in which the external connector is inserted into the connector housing 250, and a plurality of connector pins 260 disposed within the connector housing 250 and connected to the main PCB 50.

One end of each of the connector pins 260 is fixed to the PCB 50 by a method such as soldering and the other end thereof is arranged inside the connector housing and connected to the external connector.

The connector pins 260 include a pair of power connection pins 261 and 262 for supplying power to a plurality of wires, a duty command pin 263 for controlling a motor RPM, a power control pin 264, and rotational speed applying pins 265, 266 and 267 provided in the same number as the number of the cooling fans 20 and for applying a rotation speed signal of each cooling fan 20.

The connector according to another embodiment is configured so that the connector housing 250 is formed integrally with the housing 10 and the connector pins 260 are connected to the main PCB 50 and thus a separate connector is unnecessary to thereby simplify the structure, reduce the number of parts, and improve the assemblability.

While the present disclosure has been particularly shown and described with reference to exemplary embodiments thereof, by way of illustration and example only, it is clearly understood that the present disclosure is not to be construed as limiting the invention, and various changes and modifications may be made by those skilled in the art within the protective scope of the invention.

### INDUSTRIAL APPLICABILITY

The battery cooling apparatus according to the present disclosure is mounted on a high capacity battery used in an electric vehicle or a hybrid vehicle to cool the heat generated during repeated charging and discharging of the battery to prolong the life of the battery, and performs battery cooling with a plurality of cooling fans so that the battery can be uniformly cooled, in which the plurality of cooling fans can be installed in one housing, thereby enabling miniaturization.

## Claims

1. A battery cooling apparatus (200) comprising:
a housing (10) installed on a side surface of a battery pack (100) and having a suction unit (30) through which air having passed through the battery pack (100) is sucked and a discharge unit (40) through which air sucked through the suction unit (30) is discharged to the outside;
a plurality of cooling fans (20, 22, 24, 26) installed at intervals in the housing (10) to suck air through the suction unit (30) and discharge air through the discharge unit (40); and
a printed circuit board (PCB) (50) installed in an inside of the housing (10), in which the PCB (50) is fixed and electrically connected to the plurality of cooling fans (20, 22, 24, 26) to thus control operations of the cooling fans (20, 22, 24, 26),
wherein the PCB (50) comprises: a main PCB (51); and a plurality of sub-PCBs (90, 92, 94, 96) formed integrally with the main PCB (51) and formed in the same number as the number of the cooling fans (20, 22, 24, 26), in which the plurality of cooling fans (20, 22, 24, 26) are fixed and electrically connected to the plurality of sub-PCBs (90, 92, 94, 96), and
wherein each of the sub-PCBs (90, 92, 94, 96) includes a central throughhole (98) through which a rotating shaft (74) of one of the cooling fans (20, 22, 24, 26) passes, in which a plurality of terminals (52, 54) electrically connected to the cooling fan (20, 22, 24, 26) are mounted.

2. The battery cooling apparatus (200) of claim 1, wherein at least one of the sub-PCBs (90, 92, 94, 96) is separated from the main PCB (51) and connected to the main PCB (51) by a terminal (360, 370, 380).

3. The battery cooling apparatus (200) of claim 1, wherein the housing (10) comprises a first hole portion (610) through which the rotating shaft (74) of one of the cooling fans (20, 22, 24, 26) passes and a second hole portion (620) through which a terminal (52, 54) passes, in which the terminal (52, 54) is electrically connected to a coil (75) of the stator (80) by performing soldering through the second hole portion (620).

4. The battery cooling apparatus (200) of claim 1, wherein the housing (10) comprises: a first housing (12) having the discharge unit (40) formed therein and having the cooling fans (20, 22, 24, 26) and the PCB (50) installed therein; and a second housing (14) coupled to the first housing (12) and having a plurality of the suction ports (30) formed therein.

5. The battery cooling apparatus (200) of claim 1, wherein a guide unit (62) for guiding an air flow to radially discharge air flowing in an axial direction of the cooling fan (20, 22, 24, 26), and a duct unit (66) formed at an upper side of the guide unit (62) for collecting air blown from the plurality of cooling fans (20, 22, 24, 26), are formed in an inside of the housing (10).

6. The battery cooling apparatus (200) of claim 1, wherein the discharge unit (40) is formed on a rear surface of the housing (10) to discharge air to a rear side of the housing (10), or is formed on an upper surface of the housing (10) to discharge air in an upward direction of the housing (10).

7. The battery cooling apparatus (200) of claim 1, wherein the suction unit (30) formed on a front surface of the housing (10) is formed of suction ports (32, 34, 36) in an identical number to that of the cooling fans (20, 22, 24, 26).

8. The battery cooling apparatus (200) of claim 1, wherein a space portion (16) for securing a distance H between the suction unit (30) and a side surface of the battery pack (100) is formed on a front surface of the housing (10) where the suction unit (30) is formed.

9. The battery cooling apparatus (200) of claim 8, further comprising: a partitioning member (130, 132, 134) mounted in the space portion (16) and for partitioning between a plurality of suction ports (32, 34, 36) to prevent occurrence of air blowing passage interference between the cooling fans (20, 22, 24, 26).

10. The battery cooling apparatus (200) of claim 1, wherein each of the cooling fans (20, 22, 24, 26) comprises: a rotating shaft (74) rotatably supported by a support portion (72) formed in the housing (10); a stator (80) fixed to an outer circumferential surface of the support portion (72) and electrically connected to the PCB (50); a rotor (82) fixed to the rotating shaft (74) and rotated together with the rotating shaft (74); and a blade (84) installed in the rotor (82) in which air is sucked in an axial direction of the blade (84) and air is radially discharged.

11. The battery cooling apparatus (200) of claim 1, wherein the PCB (50) further comprises a connector (180) connected to the PCB (50) via wires (190) to control the plurality of cooling fans (20, 22, 24, 26) and supply power, in which the wires (190) include a pair of power connecting wires (191, 192) for supplying power to the plurality of cooling fans (20, 22, 24, 26), a duty command wire (193) for controlling a motor RPM, a power control wire (194), and rotational speed applying wires (195, 196, 197) provided in an identical number to that of the cooling fans (20, 22, 24, 26), for applying a rotational speed signal of each cooling fan (20, 22, 24, 26).

12. The battery cooling apparatus (200) of claim 1, further comprising: a connector (180) connected to the PCB (50) to control the plurality of cooling fans (20, 22, 24, 26) and supply power, in which the connector (180) includes a connector housing (250) formed integrally with the housing (10), and a plurality of connector pins (260) fixed to an inside of the connector housing and connected to the PCB (50).

13. The battery cooling apparatus (200) of claim 12, wherein the plurality of connector pins (260) comprise a pair of power connection pins (261, 262) for supplying power to the plurality of cooling fans (20, 22, 24, 26), a duty command pin (263) for controlling the motor RPM, a power control pin (264), and a rotational speed applying pin (265, 266, 267) for applying a rotational speed signal of each cooling fan (20, 22, 24, 26).

## Patentansprüche

1. Batteriekühlvorrichtung (200), umfassend:
ein Gehäuse (10), das an einer Seitenoberfläche eines Batteriepacks (100) installiert ist und eine Ansaugeinheit (30), durch die Luft, die durch den Batteriepack (100) hindurchgegangen ist, angesaugt wird, und eine Abgabeeinheit (40) aufweist, durch die die durch die Ansaugeinheit (30) angesaugte Luft nach außen abgegeben wird;
eine Vielzahl von Kühlungsventilatoren (20, 22, 24, 26), die in Intervallen in dem Gehäuse (10) installiert sind, um Luft durch die Ansaugeinheit (30) anzusaugen und Luft durch die Abgabeeinheit (40) abzugeben; und
eine Leiterplatte (PCB) (50), die in einem Inneren des Gehäuses (10) installiert ist, wobei die PCB (50) fixiert und elektrisch derart mit der Vielzahl von Kühlungsventilatoren (20, 22, 24, 26) verbunden ist, dass sie den Betrieb der Kühlungsventilatoren (20, 22, 24, 26) steuert, wobei die PCB (50) umfasst: eine Haupt-PCB (51); und eine Vielzahl von Unter-PCBs (90, 92, 94, 96), die einstückig mit der Haupt-PCB (51) ausgebildet sind und in der gleichen Anzahl wie die Anzahl der Kühlungsventilatoren (20, 22, 24, 26) ausgebildet sind, wobei die Vielzahl der Kühlungsventilatoren (20, 22, 24, 26) fixiert und elektrisch mit der Vielzahl der Unter-PCBs (90, 92, 94, 96) verbunden ist, und
wobei jede der Unter-PCBs (90, 92, 94, 96) ein zentrales Durchgangsloch (98) aufweist, durch das eine rotierende Welle (74) eines der Kühlungsventilatoren (20, 22, 24, 26) verläuft, wobei eine Vielzahl von Anschlüssen (52, 54) montiert ist, die elektrisch mit dem Kühlungsventilator (20, 22, 24, 26) verbunden sind.

2. Batteriekühlvorrichtung (200) nach Anspruch 1, wobei wenigstens eine der Unter-PCBs (90, 92, 94, 96) von der Haupt-PCB (51) getrennt und durch einen Anschluss (360, 370, 380) mit der Haupt-PCB (51) verbunden ist.

3. Batteriekühlvorrichtung (200) nach Anspruch 1, wobei das Gehäuse (10) einen ersten Lochabschnitt (610), durch den die Drehwelle (74) eines der Kühlungsventilatoren (20, 22, 24, 26) verläuft, und einen zweiten Lochabschnitt (620) aufweist, durch den ein Anschluss (52, 54) verläuft, wobei der Anschluss (52, 54) durch das Ausführen einer Lötung durch den zweiten Lochabschnitt (620) elektrisch mit einer Spule (75) des Stators (80) verbunden ist.

4. Batteriekühlvorrichtung (200) nach Anspruch 1, wobei das Gehäuse (10) umfasst: ein erstes Gehäuse (12), in dem die Abgabeeinheit (40) ausgebildet ist und in dem die Kühlungsventilatoren (20, 22, 24, 26) und die PCB (50) installiert sind; und ein zweites Gehäuse (14), das mit dem ersten Gehäuse (12) verbunden ist und in dem eine Vielzahl der Ansaugöffnungen (30) ausgebildet ist.

5. Batteriekühlvorrichtung (200) nach Anspruch 1, wobei eine Führungseinheit (62) zum Führen eines Luftstroms, um Luft, die in einer axialen Richtung des Kühlungsventilators (20, 22, 24, 26) strömt, radial abzugeben, und eine Kanaleinheit (66), die an einer oberen Seite der Führungseinheit (62) zum Sammeln von Luft, die von der Vielzahl von Kühlungsventilatoren (20, 22, 24, 26) geblasen wird, in einer Innenseite des Gehäuses (10) ausgebildet sind.

6. Batteriekühlvorrichtung (200) nach Anspruch 1, wobei die Abgabeeinheit (40) an einer hinteren Oberfläche des Gehäuses (10) ausgebildet ist, um Luft zu einer Rückseite des Gehäuses (10) abzugeben, oder an einer oberen Oberfläche des Gehäuses (10) ausgebildet ist, um Luft in einer Aufwärtsrichtung des Gehäuses (10) abzugeben.

7. Batteriekühlvorrichtung (200) nach Anspruch 1, wobei die an einer vorderen Oberfläche des Gehäuses (10) ausgebildete Ansaugeinheit (30) aus Ansaugöffnungen (32, 34, 36) in einer identischen Anzahl zu der der Kühlungsventilatoren (20, 22, 24, 26) ausgebildet ist.

8. Batteriekühlvorrichtung (200) nach Anspruch 1, wobei ein Raumabschnitt (16) zum Sicherstellen eines Abstands H zwischen der Ansaugeinheit (30) und einer Seitenfläche des Batteriepacks (100) an einer Vorderfläche des Gehäuses (10) ausgebildet ist, wo die Ansaugeinheit (30) ausgebildet ist.

9. Batteriekühlvorrichtung (200) nach Anspruch 8, ferner umfassend: ein Trennelement (130, 132, 134), das in dem Raumabschnitt (16) und zur Trennung zwischen einer Vielzahl von Ansaugöffnungen (32, 34, 36) angebracht ist, um das Auftreten von Störungen des Luftgebläsedurchgangs zwischen den Kühlungsventilatoren (20, 22, 24, 26) zu verhindern.

10. Batteriekühlvorrichtung (200) nach Anspruch 1, wobei jeder der Kühlungsventilatoren (20, 22, 24, 26) umfasst: eine Drehwelle (74), die drehbar von einem in dem Gehäuse (10) ausgebildeten Trägerabschnitt (72) getragen wird; einen Stator (80), der an einer äußeren Umfangsoberfläche des Trägerabschnitts (72) befestigt und elektrisch mit der PCB (50) verbunden ist; einen Rotor (82), der an der Drehwelle (74) befestigt ist und zusammen mit der Drehwelle (74) gedreht wird; und ein in dem Rotor (82) installiertes Blatt (84), wobei Luft in einer axialen Richtung des Blatts (84) angesaugt und Luft radial abgegeben wird.

11. Batteriekühlvorrichtung (200) nach Anspruch 1, wobei die PCB (50) ferner einen Verbinder (180) aufweist, der mit der PCB (50) über Drähte (190) verbunden ist, um die Vielzahl von Kühlungsventilatoren (20, 22, 24, 26) zu steuern und Leistung zuzuführen, wobei die Drähte (190) ein Paar von Leistungsverbindungsdrähten (191, 192) zum Zuführen von Leistung zu der Vielzahl von Kühlungsventilatoren (20, 22, 24, 26), einen Betriebsbefehlsdraht (193) zur Steuerung einer Motordrehzahl, einen Leistungssteuerdraht (194) und Drehzahlanlegedrähte (195, 196, 197), die in einer identischen Anzahl zu der der Kühlungsventilatoren (20, 22, 24, 26) vorgesehen sind, zum Anlegen eines Drehgeschwindigkeitssignals für jeden Kühlungsventilator (20, 22, 24, 26) umfassen.

12. Batteriekühlvorrichtung (200) nach Anspruch 1, ferner umfassend: einen Verbinder (180), der mit der PCB (50) verbunden ist, um die Vielzahl von Kühlungsventilatoren (20, 22, 24, 26) zu steuern und Leistung zuzuführen, wobei der Verbinder (180) ein Verbindergehäuse (250), das einstückig mit dem Gehäuse (10) ausgebildet ist, und eine Vielzahl von Verbinderstiften (260) aufweist, die an einer Innenseite des Verbindergehäuses befestigt und mit der PCB (50) verbunden sind.

13. Batteriekühlvorrichtung (200) nach Anspruch 12, wobei die Vielzahl von Verbinderstiften (260) ein Paar von Leistungsverbindungsstiften (261, 262) zum Zuführen von Leistung zu der Vielzahl von Kühlungsventilatoren (20, 22, 24, 26), einen Betriebsbefehlsstift (263) zum Steuern der Motordrehzahl, einen Leistungssteuerstift (264) und einen Drehzahlanlegestift (265, 266, 267) zum Anlegen eines Drehzahlsignals für jeden Kühlungsventilator (20, 22, 24, 26) aufweist.

## Revendications

1. Appareil de refroidissement de batterie (200) comprenant :
une enceinte (10) installée sur une surface latérale d'un bloc de batterie (100) et ayant une unité d'aspiration (30) par laquelle l'air qui est passé par le bloc de batterie (100) est aspiré, et une unité d'évacuation (40) par laquelle l'air qui est aspiré par l'unité d'aspiration (30) est évacué vers l'extérieur ;
une pluralité de ventilateurs de refroidissement (20, 22, 24, 26) installés à des intervalles dans l'enceinte (10) afin d'aspirer l'air par l'unité d'aspiration (30) et d'évacuer l'air par l'unité d'évacuation (40) ; et
une carte de circuit imprimé (PCB) (50) installée à l'intérieur de l'enceinte (10), dans lequel la PCB (50) est fixée et reliée électriquement à la pluralité de ventilateurs de refroidissement (20, 22, 24, 26) afin de contrôler les opérations des ventilateurs de refroidissement (20, 22, 24, 26),
dans lequel la PCB (50) comprend : une PCB principale (51); et une pluralité de sous-PCB (90, 92, 94, 96) formées intégralement avec la PCB principale (51) et formées selon le même nombre que celui de ventilateurs de refroidissement (20, 22, 24, 26), dans lequel la pluralité des ventilateurs de refroidissement (20, 22, 24, 26) sont fixés et reliés électriquement à la pluralité de sous-PCB (90, 92, 94, 96), et
dans lequel chacune des sous-PCB (90, 92, 94, 96) comprend un orifice traversant central (98) par lequel un arbre rotatif (74) de l'un des ventilateurs de refroidissement (20, 22, 24, 26) passe, dans lequel plusieurs bornes (52, 54) électriquement reliées aux ventilateurs de refroidissement (20, 22, 24, 26) sont montées.

2. Appareil de refroidissement de batterie (200) selon la revendication 1, dans lequel au moins l'une des sous-PCB (90, 92, 94, 96) est séparée de la PCB principale (51) et est reliée à la PCB principale (51) par une borne (360, 370, 380).

3. Appareil de refroidissement de batterie (200) selon la revendication 1, dans lequel l'enceinte (10) comprend une première partie d'orifice (610) par laquelle l'arbre rotatif (74) de l'un des ventilateurs de refroidissement (20, 22, 24, 26) passe et une seconde partie d'orifice (620) par laquelle une borne (52, 54) passe, dans lequel la borne (52, 54) est reliée électriquement à une bobine (75) du stator (80) en effectuant un soudage à travers la seconde partie d'orifice (620).

4. Appareil de refroidissement de batterie (200) selon la revendication 1, dans lequel l'enceinte (10) comprend : une première enceinte (12) ayant l'unité d'évacuation (40) formée à l'intérieur et ayant les ventilateurs de refroidissement (20, 22, 24, 26) et la PCB (50) installés à l'intérieur ; et une seconde enceinte (14) reliée à la première enceinte (12) et ayant une pluralité d'orifices d'aspiration (30) formés à l'intérieur.

5. Appareil de refroidissement de batterie (200) selon la revendication 1, dans lequel une unité de guidage (62) destinée à guider un flux d'air afin d'évacuer radialement l'air qui circule dans une direction axiale des ventilateurs de refroidissement (20, 22, 24, 26), et une unité de conduit (66) formée au niveau d'un côté supérieur de l'unité de guidage (62) afin de collecter l'air soufflé par la pluralité de ventilateurs de refroidissement (20, 22, 24, 26) sont formées à l'intérieur de l'enceinte (10).

6. Appareil de refroidissement de batterie (200) selon la revendication 1, dans lequel l'unité d'évacuation (40) est formée sur une surface arrière de l'enceinte (10) afin d'évacuer l'air vers un côté arrière de l'enceinte (10), ou est formée sur une surface supérieure de l'enceinte (10) afin d'évacuer l'air vers le haut de l'enceinte (10).

7. Appareil de refroidissement de batterie (200) selon la revendication 1, dans lequel l'unité d'aspiration (30) formée sur une surface avant de l'enceinte (10) est composée d'orifices d'aspiration (32, 34, 36) d'un nombre identique à celui des ventilateurs de refroidissement (20, 22, 24, 26).

8. Appareil de refroidissement de batterie (200) selon la revendication 1, dans lequel une partie d'espace (16) destinée à assurer une distance H entre l'unité d'aspiration (30) et une surface latérale du bloc de batterie (100) est formée sur une surface avant de l'enceinte (10) au niveau de laquelle l'unité d'aspiration (30) est formée.

9. Appareil de refroidissement de batterie (200) selon la revendication 8, comprenant en outre : un élément de séparation (130, 132, 134) monté dans la partie d'espace (16) et destiné à séparer une pluralité d'orifices d'aspiration (32, 34, 36) afin d'empêcher toute interférence de passage de soufflage d'air entre les ventilateurs de refroidissement (20, 22, 24, 26).

10. Appareil de refroidissement de batterie (200) selon la revendication 1, dans lequel chacun des ventilateurs de refroidissement (20, 22, 24, 26) comprend : un arbre rotatif (74) supporté de manière rotative par une partie de support (72) formée dans l'enceinte (10) ; un stator (80) fixé sur une surface circonférentielle externe de la partie de support (72) et relié électriquement à la PCB (50) ; un rotor (82) fixé sur l'arbre rotatif (74) et qui tourne avec l'arbre rotatif (74) ; et une pale (84) installée dans le rotor (82), dans lequel l'air est aspiré dans une direction axiale de la pale (84) et l'air est évacué radialement.

11. Appareil de refroidissement de batterie (200) selon la revendication 1, dans lequel la PCB (50) comprend en outre un connecteur (180) relié à la PCB (50) par des fils (190) afin de contrôler la pluralité de ventilateurs de refroidissement (20, 22, 24, 26) et de fournir de l'énergie, dans lequel les fils (190) comprennent une paire de fils d'alimentation (191, 192) destinés à fournir de l'énergie à la pluralité de ventilateurs de refroidissement (20, 22, 24, 26), un fil de commande de fonctionnement (193) destiné à contrôler le nombre de tours par minute du moteur, un fil de contrôle d'alimentation (194), et des fils d'application de vitesse de rotation (195, 196, 197) prévus dans un nombre identique à celui des ventilateurs de refroidissement (20, 22, 24, 26), afin d'appliquer un signal de vitesse de rotation de chaque ventilateur de refroidissement (20, 22, 24, 26).

12. Appareil de refroidissement de batterie (200) selon la revendication 1, comprenant en outre : un connecteur (180) relié à la PCB (50) afin de contrôler la pluralité de ventilateurs de refroidissement (20, 22, 24, 26) et de fournir de l'énergie, dans lequel le connecteur (180) comprend un logement de connecteur (250) formé intégralement avec l'enceinte (10), et une pluralité de broches de connecteur (260) fixées sur un intérieur du logement de connecteur et reliées à la PCB (50).

13. Appareil de refroidissement de batterie (200) selon la revendication 12, dans lequel la pluralité de broches de connecteur (260) comprend une paire de broches d'alimentation (261, 262) destinées à fournir de l'énergie à la pluralité de ventilateurs de refroidissement (20, 22, 24, 26), une broche de commande de fonctionnement (263) destinée à contrôler le nombre de tours par minute du moteur, une broche de contrôle d'alimentation (264), et une broche d'application de vitesse de rotation (265, 266, 267) destinée à appliquer un signal de vitesse de rotation de chaque ventilateur de refroidissement (20, 22, 24, 26).
